# EUROPÄISCHE PATENTSCHRIFT

(11) **EP 1 379 401 B1**
(45) Veröffentlichungstag und Bekanntmachung des Hinweises auf die Patenterteilung: **23.06.2004**
(21) Anmeldenummer: 02747275.2
(22) Anmeldetag: 11.04.2002
(51) Int. Cl.: B60J 7/047

(54) **LAMELLENDACH FÜR FAHRZEUGE**
SLAT ROOF FOR VEHICLES
TOIT A LAMELLES POUR VEHICULE

(30) Priorität: 20.04.2001 DE 10119667
(43) Veröffentlichungstag der Anmeldung: 14.01.2004
(73) Patentinhaber: CTS Fahrzeug-Dachsysteme GmbH, 21079 Hamburg (DE)
(72) Erfinder: SALZ, Wolfram, 71665 Vaihingen am Enz (DE)
(74) Vertreter: Wittner, Walter
(86) Internationale Anmeldenummer: PCT/EP2002/004032
(87) Internationale Veröffentlichungsnummer: WO 2002/085654

(56) Entgegenhaltungen:
- DE-C- 19 529 702
- DE-C- 19 927 654
- US-A- 5 836 642
- US-A- 5 897 160

## Beschreibung

Die Erfindung betrifft ein Lamellendach für Fahrzeuge gemäß dem Oberbegriff des Anspruches 1.

Lamellendächer der vorgenannten Art sind aus der DE 199 27 654 Cl bekannt. Die Lamellen sind über eine Führungsmechanik schienengeführt in einer Dachöffnung angeordnet und zwischen einer Schließstellung, in der sie die Dachöffnung abdecken, und einer Öffnungsstellung umstellbar. In der Öffnungsstellung sind die Lamellen schichtartig einander übergreifend zusammengefahren. Die Führungsmechanik, über die die Lamellen in der Schienenführung abgestützt sind, umfasst Lamellenträger und Führungsschlitten, die mit den Lamellenträgern über Stützhebel verbunden sind, über die aufeinander folgende Lamellen gegeneinander verstellbar und/oder in ihrer Bewegung gegeneinander zu sperren sind. Jeweils zumindest ein Stützhebel ist mit einer Lamelle auf einem Führungsschlitten gelagert, wobei als Stützhebel sowohl Steuerwippen wie auch Sperrhebel vorgesehen sind. Für die einzelnen Lamellen erfolgt die Abstützung bzw. Sicherung in der jeweiligen Sperrlage über die dieser Lamelle zugeordneten Stützhebel, untereinander sind die Lamellen lediglich über eine Zwangkopplung verbunden, die unter Vermittlung eines als Steuerwippe ausgebildeten Stützhebels jeweils aufeinander folgende Lamellen in ihrer Ausstellbewegung steuert, wobei die Steuerwippe die Abstützung für eine Lamelle bildet und ein an der Steuerwippe angelenkter Sperrhebel die Sicherung des die Steuerwippe tragenden Führungsschlittens gegenüber dem jeweils nächst folgenden Führungsschlitten bei in Öffnungsrichtung übereinander ausgefahrenen Lamellen übernimmt.

Grundsätzlich ruht bei dieser Lösung jede Lamelle auf zwei aufeinander folgenden Führungsschlitten, die bei in Öffnungsrichtung ausgestellter Lamelle miteinander verkoppelt sind, wobei die dieser Lamelle als Stützwippe und Sperrhebel zugehörigen Stutzhebel jeweils eine eigenständige Abstützung bilden, die hinsichtlich der Stabilität und der Spielfreiheit, die für ein Lamellendach auch im geöffneten Zustand gefordert wird, nur schwer zu beherrschen ist.

Der Erfindung liegt dementsprechend die Aufgabe zugrunde, ein Lamellendach der eingangs genannten Art dahingehend weiterzubilden, dass ohne zusätzliche eigenständige Bauelemente eine Versteifung der Abstützung der Lamellen des geöffneten Lamellendaches erreicht wird.

Erreicht wird dies durch die kennzeichnenden Merkmale des Anspruches 1. Die vorhandenen Stützhebel bilden bei dieser Ausgestaltung bezogen auf aufeinander folgende Lamellen einen Stützverband, der verschiedene Möglichkeiten eröffnet. So kann der Koppelpunkt zwischen aufeinander folgenden Führungsschlitten zugeordneten Stützhebeln dahingehend gewählt werden, dass sich, bezogen auf die jeweilige Lamelle, geringere freie Stützlängen ergeben. Es kann ferner die Abstützung lediglich verspannend erfolgen, so dass fertigungstechnisch nahezu unvermeidliche Spiele, die zu Geräuschbildung beitragen können, durch wechselseitige Verspannung ausgeschaltet werden können. Des Weiteren ist die erfindungsgemäße Verbundbildung auch zweckmäßig, um lokale Belastungsspitzen, wie sie beispielsweise durch Windkräfte, insbesondere bei mit Dachhaut ausgebildeten Lamellendächern, auftreten können, auf breiter Basis abzufangen.

Als besonders zweckmäßig erweist es sich, als Stützhebel Steuerwippen einzusetzen, die die bezogen auf die Fahrtrichtung jeweils vordere Lamelle abstützen, wobei die Abstützung im Rahmen der Erfindung dadurch erfolgt, dass die Steuerwippe mit der abgestützten, auf vorderen Lamelle über eine längs deren Lamellenträger verlaufende Führungskulisse verbunden ist.

Wird bei einer solchen Lösung die Schwenkachse der Steuerwippe zur Schwenkachse der über den gleichen Führungsschlitten getragenen, rückwärtigen Lamelle in Fahrtrichtung versetzt angeordnet, so bietet sich in vorteilhafter Weise die Möglichkeit, die Steuerwippe und den Lamellenträger, die über den gleichen Führungsschlitten getragen werden, in gleicher Erstreckung auszuführen, so dass sich bei aufeinander gefahrenen Führungsschlitten und in entsprechender Weise in Öffnungsrichtung ausgestellten Lamellen. die Möglichkeit bietet, zu einer Überlappung der Steuerwippen zu kommen und den Überlappungsbereich für die Abstützung der Steuerwippen gegeneinander zu nutzen.

Eine besonders zweckmäßige Lösung ergibt sich dabei, wenn der Stützzapfen, über den die jeweilige Steuerwippe sich an die Führungskulisse des Lamellenträgers anlegt oder in die Führungskulisse des Lamellenträgers eingreift, als Kupplungselement zwischen den zu verbindenden Führungswippen genutzt wird, bzw. als Abstützelement, falls keine übergreifende Verbindung hergestellt werden soll, sondern lediglich eine Verspannung der Steuerwippen und der mit diesen verbundenen Teile, um beispielsweise herstellungsbedingte Spiele auszugleichen.

Im Rahmen der Erfindung ist es auch möglich, als Stützhebel zur Verriegelung aufeinander folgender und aufeinander aufgefahrener Führungsschlitten verwendete Sperrhebel einzusetzen, wobei die Verspannung durch die gegenseitige Abstützung der Sperrhebel dafür genutzt werden kann, die Sperrhebel in Richtung auf ihre lamellenseitige und ihre führungsschienenseitige Abstützung zu belasten und dadurch dem Lamellenverbund eine höhere Steifigkeit zu geben.

Besonders vorteilhaft ist die erfindungsgemäße Lösung in Verbindung mit Lamellendachkonstruktionen, bei denen, bezogen auf einen jeweiligen Führungsschlitten, die Lagerung der Lamelle am rückwärtigen Ende des Führungsschlittens vorgesehen ist und die Lagerung der gleichgerichtet zur Lamelle ausgerichteten Stützhebel in Form der Steuerwippe und/oder des Sperrhebels dem vorderen Ende des Führungsschlittens zugeordnet ist, und dies insbesondere bei gleichachsiger Lagerung von Steuerwippe und Sperrhebel, so dass sich zur Abstützzwecken geeignete Überlappungsbereiche sowohl bezüglich der Steuerwippe wie auch des Sperrhebels ergeben.

Weitere Einzelheiten und Merkmale der Erfindung ergeben sich aus den Ansprüchen. Ferner wird die Erfindung nachfolgend anhand der Zeichnungen mit weiteren Einzelheiten erläutert. Es zeigen:

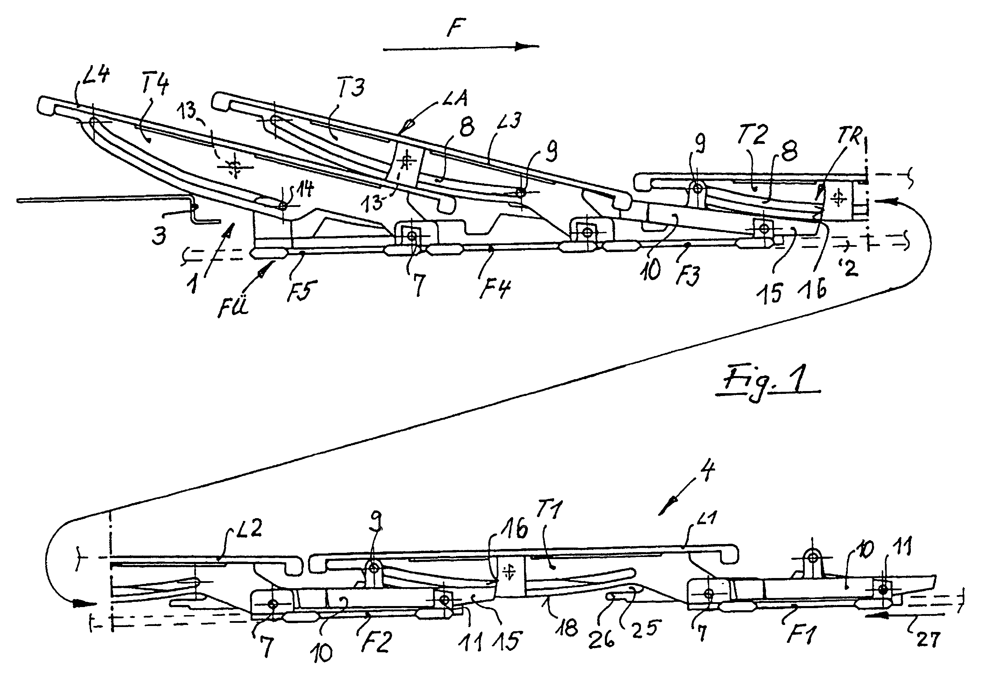

- Fig.1: bezogen auf ein Lamellendach für Fahrzeuge mit quer zur Dachöffnung liegenden Lamellen, die beiderseits der Dachöffnung in in Fahrzeuglängsrichtung verlaufenden Führungsschienen über Führungsschlitten geführt sind und die in der Schließstellung einen flächigen, die Dachöffnung abdeckenden Verbund bilden und in der Öffnungsstellung entgegen der Fahrtrichtung schichtartig einander übergreifend schräg nach hinten oben angestellt gegen die rückwärtige Begrenzung der Dachöffnung verfahren sind, in einer schematisierten Ansicht bei teilweise geöffnetem Lamellendach die bezogen auf die Fahrtrichtung rechtsseitige Abstützung der Lamellen über ihre Führungsschlitten in der Schienenführung, von der Fahrzeugmitte aus gesehen,
- Fig. 2: eine der Fig. 1 entsprechende Darstellung der gleichen, bezogen auf die Fahrtrichtung rechtsseitigen Lamellenabstützung in einer Ansicht von der Gegenseite, d.h. von seitlich außen, wobei der Übersichtlichkeit halber von den zwischen Lamellenträgern und Sperrhebeln liegenden Stützhebeln die Steuerwippen nicht dargestellt sind,

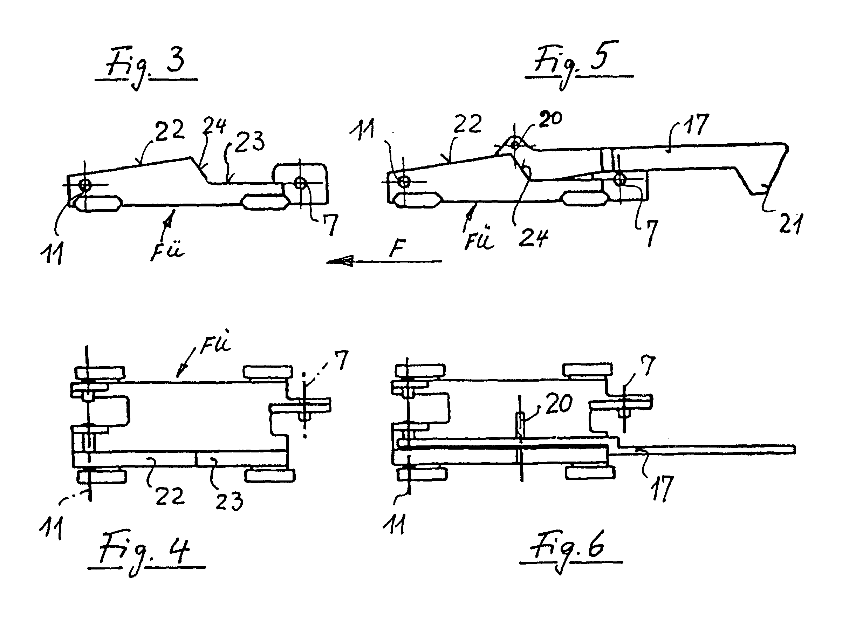

- Fig. 3 und 4: eine schematisierte isolierte Darstellung eines Führungsschlittens in Seitenansicht und Draufsicht,
- Fig. 5 und 6: einen Führungsschlitten gemäß Fig. 3 und 4 in Seitenansicht und Draufsicht, wobei der Führungsschlitten als Stützhebel ein Sperrelement in Form eines Sperrhebels trägt,

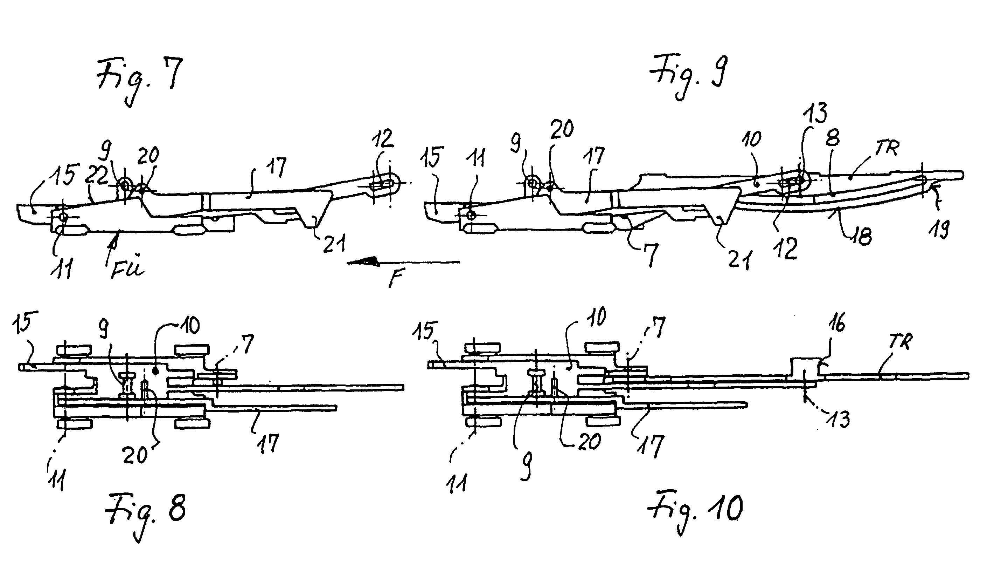

- Fig. 7 und 8: den Fig. 3 bzw. 5 und 4 bzw. 6 entsprechende Darstellungen, wobei der Führungsschlitten nunmehr mit Sperrelement und Steuerwippe als Stützhebeln dargestellt ist,
- Fig. 9 und 10: den Fig. 3 bzw. 5 bzw. 7 und 4 bzw. 6 bzw. 8 entsprechende Darstellungen, wobei zu Sperrelement und Steuerwippe als Stützhebeln der vom jeweiligen Führungsschlitten getragene und über eine Schwenkachse lagefest mit diesem Führungsschlitten schwenkbar verbundene Lamellenträger zusätzlich dargestellt ist,
- Fig. 11: eine Explosionsdarstellung, stark schematisiert, eines Führungsschlittens mit gemäß Fig. 9 und 10 zugeordneten Teilen der Führungsmechanik in Perspektive, und
- Fig. 12: bezogen auf das geöffnete Lamellendach der in Fahrtrichtung vordere Teil desselben bei aufeinander gefahrenen Führungsschlitten und ausgestellten Lamellen in vergrößerter schematischer Darstellung, wobei zur Vereinfachung in dieser, in der Ansicht der Fig. 2 entsprechenden Darstellung die in der Ansicht vorne liegenden Teile der Führungsmechanik, so insbesondere die Sperrelemente in Form von Sperrhebeln nicht dargestellt sind.

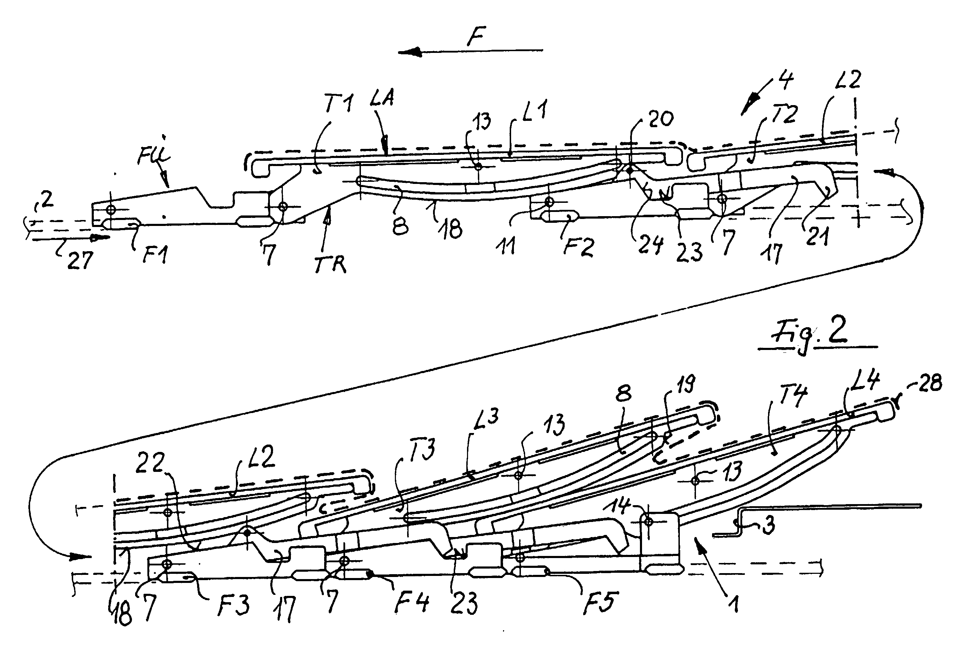

Die Fig. 1 und 2 zeigen ein Lamellendach gemäß der Erfindung in der Zuordnung zu einem Fahrzeug, wobei sich die Darstellung bezüglich des Fahrzeuges auf einen Teil der Dachöffnung 1, der seitlich in Fahrzeuglängsrichtung zur Dachöffnung 1 verlaufenden Führungsschienen 2 und der rückwärtigen Begrenzung 3 der Dachöffnung 1 beschränkt. Die Dachöffnung 1 ist bei geschlossenem Lamellendach 4 von den Lamellen LA, im einzelnen L1 bis L4 überdeckt, wobei die Lamellen L1 bis L4 in der angesprochenen Schließstellung einen flächigen Verbund bilden, abweichend von der in den Fig. 1 und 2 gezeigten teilweisen Öffnungsstellung. Bezogen auf diese Öffnungsstellung sind die Lamellen L1 bis L4, wie für die Lamellen L3 und L4 erkennbar, einander schichtartig übergreifend schräg nach oben angestellt, und zwar, entgegen dem die Fahrtrichtung des Fahrzeuges und die Schließrichtung des Lamellendaches symbolisierenden Pfeil F, schräg nach hinten und oben.

Die Abstützung der Lamellen L1 bis L4 gegenüber dem Fahrzeugaufbau erfolgt über die in den Führungsschienen 2 laufenden Führungsschlitten FÜ, im einzelnen F1 bis F5, wobei jede der Lamellen L1 bis L4 auf zwei der Führungsschlitten FÜ abgestützt ist, so beispielsweise die Lamelle L1 auf den Führungsschlitten F1 und F2 und die Lamelle L2 auf den Führungsschlitten F2 und F3. Damit ergibt sich entsprechend der Abfolge eine Lagerung bzw. Abstützung aufeinander folgender Lamellen, so beispielsweise L1 und L2, in deren Übergangsbereich auf einem Führungsschlitten F2.

Die nachfolgende Beschreibung der Erfindung ist im Wesentlichen auf die Beschreibung der im Übergang zwischen aufeinander folgenden Lamellen LA liegenden und jeweils einen Führungsschlitten FÜ, so beispielsweise dem Führungsschlitten F2 zugeordneten Führungsmechanik 6 beschränkt, die entsprechend dem Führungsschlitten F2 im Übergang zwischen den aufeinander folgenden Lamellen, so beispielsweise L1 und L2 liegt und über die der Führungsschlitten F2 mit dem Lamellenträger T1 bzw. T2 der für die Lamellen L1 bis L4 entsprechend mit TR, im einzelnen mit T1 bis T4 bezeichneten Lamellenträger verbunden ist.

Jede der Lamellen L1 bis L4 ist auf dem bezogen auf die Fahrtrichtung des Fahrzeuges, bzw. Schließrichtung des Daches F jeweils vorderen Führungsschlitten F1 bis F4 schwenkbar abgestützt, wobei die entsprechenden Schwenkachsen jeweils mit 7 bezeichnet sind und dem bezogen auf die Fahrtrichtung F rückwärtigen Ende des jeweiligen Führungsschlitten F1 bis F4 zugeordnet sind. Die Verbindung der jeweiligen Lamelle L1 bis L4 mit den zugehörigen Führungsschlitten F1 bis F5 erfolgt über den der Lamelle L1 bis L4 jeweils zugeordneten Lamellenträger T1 bis T4, der in seiner Längserstreckung mit einer nach der von der jeweiligen Lamelle L1 bis L4 abgewandten Seite durchgebogenen, in Längsrichtung verlaufenden Führungskulisse 8 versehen ist, in die jeweils ein Stützzapfen 9 eingreift, der bezogen auf die jeweilige Führungsmechanik 6 einem Stützhebel in Form einer Steuerwippe 10 zugeordnet ist, die auf dem zur jeweiligen Lamelle L1 bis L3 rückwärtigen Führungsschlitten F1 bis F4 gelagert ist. Die Lagerung der Steuerwippe 10 erfolgt in einer Schwenkachse 11, die bezogen auf den jeweiligen Führungsschlitten F1 bis F4 lagefest ist und dem zur lagefesten Schwenkachse 7 gegenüberliegenden, vorderen Ende des Führungsschlittens F2 bis F4 zugeordnet ist. Die Steuerwippe 10 ist ihrerseits aber nicht nur Träger des Stützzapfens 9, der in der Führungskulisse 8 des bezogen auf den die Steuerwippe 10 jeweils tragenden Führungsschlitten F2 bis F4 vorderen Lamellenträgers T1 bis T3 läuft, sondern ihrerseits auch mit der jeweils entgegen der Fahrtrichtung F nächst folgenden, also rückwärtigen Lamelle L2 bis L4 derart in Schwenkrichtung der Lamelle abgestützt verbunden, das entsprechend der Schwenkbewegung der jeweiligen Lamelle L1 bis L4 zwischen ihrer zum Dachverbund flächigen Lage und der aus dem Dach ausgestellten Lage eine Verschwenkung der Steuerwippe 10 stattfindet.

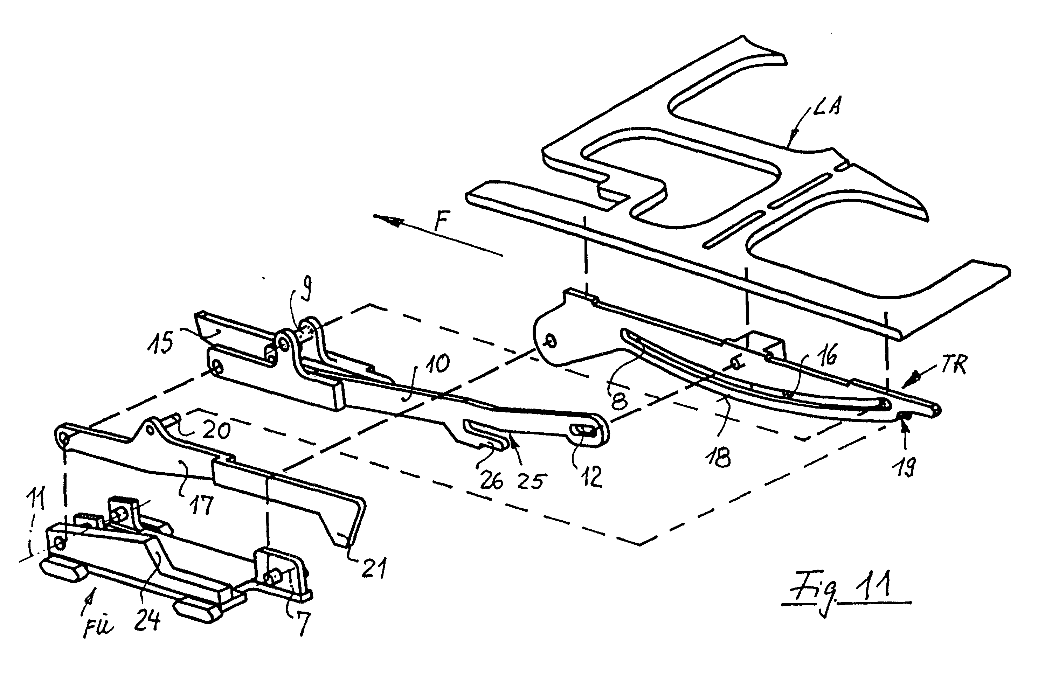

Die Anbindung der Steuerwippe 10 an der entgegen der Fahrtrichtung F jeweils nächst folgenden Lamelle L1 bis L4 erfolgt über eine Langlochführung 12, der am Lamellenträger T1 bis T4 der jeweils rückwärtigen Lamelle L1 bis L4 ein Führungszapfen 13 zugeordnet ist, wie dies insbesondere Fig. 9 und 10 sowie Fig. 11 veranschaulichen, wie aber auch in Fig. 2 erkennbar ist.

Bezüglich des Führungsschlittens F1, der als in Fahrtrichtung F vorderster Führungsschlitten keine Abstützung für eine voraufgehende Lamelle bildet, ist die Steuerwippe 10 ohne Führungsfunktion für eine in Fahrtrichtung voraufgehende Lamelle, wird im Ausführungsbeispiel aus anderweitigen, später noch anzusprechenden Gründen aber beibehalten.

Eine Führungsfunktion über eine Steuerwippe 10 ist auch bezüglich der entgegen der Fahrtrichtung F letzten Lamelle L4 nicht gegeben, sondern es ist bezogen auf diese letzte Lamelle L4 ein zum Führungsschlitten F 5 lagefester Stützzapfen 14 vorgesehen, der in seiner Lage in Verbindung mit einer Sonderform der Fuhrungskulisse 8 für die erforderliche Ausstellbewegung der entgegen der Fahrtrichtung F letzten Lamelle L4 sorgt, wenn der Lamellenverbund in Öffnungsrichtung, d.h. entgegen der Fahrtrichtung F über den vordersten Führungsschlitten F1, dem ein nicht näher dargestellter Schubantrieb zugeordnet ist, beaufschlagt wird. Der auf den ersten Führungsschlitten F1 wirkende Antrieb, beispielsweise ein drucksteifer Kabelantrieb, ist durch den Pfeil 27 symbolisiert.

Bezüglich der hierzu erforderlichen Schubkraftübertragung sind die Lamellen L1 bis L4 unter Vermittlung der von den jeweils zwischen ihnen liegenden Führungsschlitten F2 bis F5 getragenen Steuerwippen 10 gegeneinander verriegelt, bis durch Anstellung der jeweils rückwärtigen Lamelle, beginnend mit der Lamelle L4, und der mit dieser schwenkverbundenen Steuerwippe 10 die Verrastung dieser Steuerwippe 10 gegenüber der jeweils bezogen auf die Fahrtrichtung F vorderen Lamelle L3 bis L1, bzw. deren Lamellenträger T3 bis T1 aufgehoben wird. Zur Verrastung weist die Steuerwippe 10 ein in Fahrtrichtung F über ihre Schwenkachse 11 gegenüber dem jeweiligen Führungsschlitten F5 bis F2 hinausragendes Endteil 15 auf, das bei geschlossenem Lamellendach 4 in seitlicher Überdeckung zu einem lamellenfesten Anschlag 16 liegt, der beispielsweise als seitlicher Ansatz zum jeweiligen Lamellenträger T3 bis T1 vorgesehen ist und der in Abstimmung auf das Endteil 15 eine gekrümmte Anschlagbahn aufweist, so dass entsprechend der Winkellage der Steuerwippe 10 zum jeweiligen Führungsschlitten F3 bis F1 die Schubabstützung beim Öffnen des Daches freigegeben wird oder beim Verfahren des Daches in Schließrichtung ein Einschwenken der Steuerwippe 10 in eine Überdeckungslage zum Anschlag möglich ist, aus der sich bei weiterem Versatz der Lamellen L in Richtung auf ihre Schließlage für die Dachöffnung erneut eine Lage ergibt, in der eine Schubabstützung gegeben ist.

Fig. 2 ergänzt Fig. 1 und die in Verbindung mit Fig. 1 gegebene Erläuterung der erfindungsgemäßen Lamellendachkonstruktion um eine der Fig. 1 entsprechende Ansicht der Lamellenführung von der Gegenseite, nämlich von der Fahrzeugaußenseite, wobei in dieser Ansicht als weitere Stützhebel Sperrelemente 17 in Form von Sperrhebeln erkennbar sind, die, in der Ansicht den nicht dargestellten Steuerwippen 10 vorgelagert, ergänzend zu den Steuerwippen 10 den jeweils zwischen zwei Lamellen L1 und L2, L2 und L3 sowie L3 und L4 liegenden Führungsschlitten F2, F3 und F4 zugeordnet sind und über die, als eine Funktion dieser Sperrelemente 17, die Führungsschlitten F2 und F3, F3 und F4 sowie F4 und F5 bei in die Öffnungsstellung zusammengeschobenem Lamellendach 4 gegeneinander verriegelt sind. Die Sperrhebel 17 haben jeweils die gleiche Erstreckung wie die Steuerwippen 10, erstrecken sich also in Richtung auf den jeweils rückwärtigen Führungsschlitten F3 bzw. F4 bzw. F5, wobei die Schwenkachse der Sperrhebel 17 im jeweils bezogen auf die Fahrtrichtung vorderen Bereich des Führungsschlittens liegt und, einer bevorzugten Lösung zufolge, koaxial zur Schwenkachse 11 der vom gleichen Führungsschlitten getragenen Steuerwippe 10, so dass die Schwenkachse 11 eine gemeinsame Schwenkachse bildet, was sich auch unter Fertigungs- und Toleranzgesichtspunkten als zweckmäßig erweist.

Gesteuert sind die Sperrhebel 17 jeweils über die dem sie tragenden Führungsschlitten im Bezug auf die Fahrtrichtung F vorgelagerte Lamelle L1-L3, bzw. deren Lamellenträger T1-T3, wobei im Ausführungsbeispiel die freie, von der jeweiligen Lamelle abliegende Kante des Lamellenträgers T1 bis T3 eine Abstützkante 18 bildet und im wesentlichen einen der jeweiligen Führungskulisse 8 entsprechenden Verlauf aufweist. Die Abstützkante 18 weist anschließend an den rückwärtigen Endbereich der Führungskulisse 8 einen in Richtung auf die jeweilige Lamelle rückspringenden Verlauf auf, wobei dieser Rücksprung als Stufe 19 einen Rastabsatz für einen Stütznocken 20 des Sperrhebels 17 bildet, der im Ausführungsbeispiel als Zapfen ausgebildet ist, der seitlich zum Sperrhebel 17 auskragt und den jeweiligen Lamellenträger T1 bis T3 untergreift. Die Stufe 19 bildet eine Auflaufschräge, die entgegen der Fahrtrichtung F geneigt in Richtung auf die jeweilige Lamelle verläuft und die somit einen gleitenden Übergang in Richtung auf die Abstützkante 18 in deren entlang der Führungskulisse 8 verlaufenden Bereich ermöglicht.

Über den Stütznocken 20 hinausreichend läuft der Sperrhebel 17 im Bereich seines freien, von der Schwenkachse 11 abgelegenen Endes in einer Sperrnase 21 aus, der an dem Führungsschlitten, der jeweils entgegen der Fahrtrichtung F auf den den Sperrhebel 17 tragenden Führungsschlitten folgt, eine Auflaufschräge 22 zugeordnet ist, die in einer Rastaufnahme 23 endet, wobei auch hier der Übergang von der Auflaufschräge 22 in die Rastaufnahme 23 bevorzugt verlaufend erfolgt und die Rastaufnahme 23 bezüglich ihrer an die Auflaufschräge 22 anschließenden Seite 24 unter einem stumpfen Winkel zur Auflaufschräge 22 verläuft.

Nicht dargestellt ist in den Ausführungsbeispielen, dass der Sperrhebel 17 erfindungsgemäß bevorzugt in Richtung auf seine Anlage gegen die jeweilige Abstützkante 18, bzw. den durch die Stufe 19 gebildeten Rastabsatz 19 federbelastet ist, so dass bezogen auf die Schließstellung des Daches 4 und auch Zwischenstellungen im Übergang zur vollen Öffnungslage des Daches 4, in denen der Sperrhebel 17 noch nicht gegen die Auflagefläche 22 abgestützt ist, die dem in Öffnungsrichtung nächst folgenden Schlitten zugeordnet ist, für den Stütznocken 20 eine Anlage an der Abstützkante 18 bzw. deren Stufe 19 gewährleistet ist. In Abhängigkeit von der Vorspannkraft der Feder ergibt sich bei Anlage des Stütznockens 20 an der Stufenschräge 19 auch eine Abstützung in Längsrichtung des Fahrzeuges entgegen der zum Öffnen des Lamellendaches aufzubringenden Schubkraft, so dass, insoweit überlagert, die Steuerwippe 10 und der Sperrhebel 17 Stützfunktion haben und einander ergänzen. Durch die Ausgestaltung der jeweiligen Stützflächen und die durch konstruktive Vorgaben erreichbare zeitliche Abstimmung lässt sich eine wechselseitige Entlastung erreichen und es lassen sich insbesondere auch unzuträglich hohe Kantenbelastungen und dadurch bedingter Verschleiß vermeiden.

Die erfindungsgemäße Lösung ist auch bezüglich unvermeidlicher Toleranzen gut beherrschbar, da - bezogen auf jeweils einen Führungsschlitten FÜ - Lamellenträger LA, Sperrhebel 17 und Steuerwippe 10 jeweils unmittelbar am Führungsschlitten FÜ gelagert sind und sich somit kurze Toleranzketten ergeben. Insbesondere ermöglicht die erfindungsgemäße Ausgestaltung auch in der Breite einen sehr kompakten Aufbau, wobei es sich als vorteilhaft erweist, wenn die Steuerwippe 10 eine beidseitige Abstützung für den in die Kulisse 8 eingreifenden Stützzapfen 9 aufweist, was die Führungsstabilität erhöht. Entsprechend ist der Anschlag 16 zwischen dem Endteil 15 der Steuerwippe 10 und der bezogen auf die Fahrtrichtung F jeweils vorderen Lamelle LA zum jeweiligen Lamellenträger TR seitlich abgesetzt, um den erforderlichen freien Durchgang zu gewährleisten.

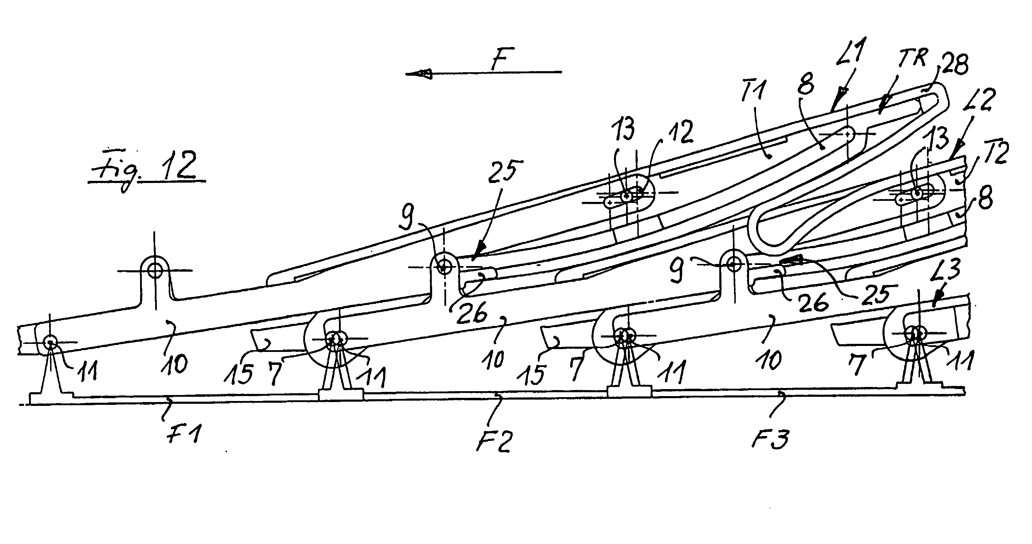

Insbesondere Fig. 11 und 12 lassen erkennen, dass die Stützhebel in Form der Steuerwippen 10 jeweils nahe ihrem Endbereich mit dem Langloch 12 ein Fangmaul 25 aufweisen, das in Richtung auf das Langloch 12 offen ist und das durch einen Ast 26 begrenzt ist, der an dem zum jeweiligen Lamellenträger TR parallel und benachbart verlaufenden Ausleger der Steuerwippe 10 vorgesehen ist und in der Ebene dieses Auslegers liegt. Bezogen auf die Endstellung der Steuerwippe 10 bei aufeinandergefahrenen Führungsschlitten ist, wie aus Fig. 1 für die Führungsschlitten F3 und F4 und die diesen zugeordneten Führungsmechaniken ersichtlich, die am Führungsschlitten F4 gelagerte Steuerwippe mit ihrem Stützzapfen 9 in die in Fahrtrichtung F vordere Endlage in der Führungskulisse 8 des Lamellenträgers T3 eingelaufen, der auf dem Führungsschlitten F3 gelagert ist. Damit ist entsprechend der ausgestellten Öffnungslage der Lamelle L3 und ihres Lamellenträgers T3 auch die Steuerwippe 10 ausgestellt, die auf dem Führungsschlitten F3 gelagert ist und die mit der Lamelle L3 über den in Fig. 1 nur strichliert angedeuteten Führungszapfen 13 verbunden ist, der in das Langloch 12 der Steuerwippe eingreift. Bei dieser Lage der auf dem Führungsschlitten F3 gelagerten Steuerwippe 10 ist deren Fangmaul 25 auf den Stützzapfen 9 der auf dem Führungsschlitten F4 gelagerten Steuerwippe 10 aufgelaufen, die in der Darstellung gemäß Fig. 1 weitgehend nicht sichtbar und durch den Lamellenträger T3 überdeckt ist. Durch den Eingriff des Stützzapfens 9 in das Fangmaul 25 ergibt sich eine unmittelbare Abstützung zwischen den Steuerwippen 10, von denen die eine auf dem Führungsschlitten F3 und die andere auf dem Führungsschlitten F4 gelagert ist und es bilden diese beiden Steuerwippen 10 zusammen mit den sie tragenden Führungsschlitten F3 und F4 ein ungleichseitiges Stützdreieck mit durch die Führungsschlitten F3 und F4 gebildeter Basis und im Stützzapfen 9 liegendem Scheitel. Die bei dieser Lösung erreichte Verspannung der Steuerwippen 10 gegeneinander, die auch in anderer Weise als durch ein Führungsmaul 25 erreicht werden kann, führt zu einer sehr stabilen Abstützung der Lamellen LA in ihrer ausgestellten Öffnungslage, wie dies im Hinblick auf eine möglichst schwingungsfreie Abstützung der Lamellenträger TR und der durch diese getragenen Lamellen LA angestrebt wird und erforderlich ist.

Fig. 12, in der gleiche Bezugszeichen Verwendung finden, veranschaulicht die angesprochene Aussteifung des Lamellenverbundes bei geöffnetem Dach über jeweils gegeneinander verhakte, bevorzugt gegeneinander verspannte Stützhebel in Form von Steuerwippen 10 in vergrößerter schematisierter Darstellung.

Die erfindungsgemäße Führungsmechanik ist sowohl für Lamellendachkonstruktionen geeignet, bei denen die Lamellen LA gegeneinander und gegen die Dachöffnung 1 abdichtend miteinander verbunden sind, was hier nicht weiter dargestellt ist. Erfindungsgemäß kann die Führungsmechanik aber auch in Verbindung mit einer Dachkonstruktion Verwendung finden, bei der die Lamellen LA lediglich Tragflächen für einen Bezug bilden, der als Dachhaut dient und der auf die Lamellen LA als Faltenspriegel aufgebracht ist, wobei die Dachhaut bei geöffnetem Lamellendach und damit ausgestellten Faltenspriegeln im Übergang zwischen diesen eine Übergangsfalte bildet. In Fig. 2 ist schematisiert die Aufbringung einer solchen Dachhaut 28 auf die Lamellen L1 bis L4 angedeutet und die Dachhaut 28 als Strichlinie dargestellt. Weiter ist die Dachhaut 28 auch in Fig. 12 dargestellt.

Fig. 11 veranschaulicht, dass bei Abdeckung der Lamellen LA durch eine Dachhaut 28 die Lamellen LA lediglich eine Traggerüst bilden und deshalb auch entsprechend ausgespart sein können, also auch besonders leicht ausgeführt sein können. Insbesondere in Verbindung mit einer solchen Ausgestaltung erweist sich eine Abstützung der lediglich Spriegelfunktion wahrnehmenden Lamellen, z. B. durch entsprechende Verspannung über Steuerwippen 10, als besonders vorteilhaft, um Flattererscheinungen zu vermeiden, ungeachtet der durch die Dachhaut 28 bedingten zusätzlichen Angriffsflächen für Windkräfte. Die in Verbindung mit einer Abdeckung durch eine teils auf den Lamellen LA frei aufliegende, teils mit den Lamellen LA fest, insbesondere durch Verklebung verbundene Dachhaut 28 mögliche, leichte und/oder ausgesparte Ausbildung der Lamellen LA ist auch im Hinblick auf die Faltenbildung der Dachhaut 28 zweckmäßig, da so bereichsweise ein vergrößerter Faltraum geschaffen werden kann, wie dies in Fig. 12 erkennbar ist.

## Patentansprüche

1. Lamellendach für Fahrzeuge mit zumindest zwei einer Dachöffnung zugeordneten Lamellen (L1-L4), die dachfest fixierbar sind und über eine Führungsmechanik (6) schienengeführt zwischen einer Schließstellung, in der sie die Dachöffnung (1) abdeckend in einem flächigen Verbund angeordnet sind, und einer die Dachöffnung (1) freigebenden Öffnungsstellung, in der sie einander schichtartig übergreifend in Öffnungsrichtung schräg nach oben angestellt sind, beweglich sind, wobei die Lamellen (L1-L4) des in Richtung auf ihre rückwärtige Öffnungsstellung antriebsbeaufschlagten Verbundes, beginnend für aufeinander folgende Lamellen (z. B. L1 und L2) mit der rückwärtigen Lamelle (L2), unter überlappend gleichsinniger Verschwenkung in Richtung auf ihre Öffnungsstellung über die Führungsmechanik (6) umstellbar sind, die Lamellenträger (T1-T4) und Führungsschlitten (F1-F5) umfasst, sowie aufeinander folgende Lamellen (L1 und L2) gegeneinander verstellende und/oder in ihrer Bewegung sperrende Stützhebel (Steuerwippe 10, Sperrhebel 17) aufweist, von denen jeweils wenigstens einer mit einer Lamelle (L1 bzw. L2) auf einem Führungsschlitten (F1 bzw. F2 ) gelagert ist,
**dadurch gekennzeichnet,**
**dass** zur Abstützung der Lamellen (z. B. L1) in der Öffnungsstellung des Daches (4) aufeinander folgenden Führungsschlitten (F1 und F2) zugeordnete und, bezogen auf die von diesen getragenen Lamellen (L1), einander entsprechende Stützhebel (10) gegeneinander abgestützt sind.

2. Lamellendach nach Anspruch 1,
**dadurch gekennzeichnet,**
**dass** ein Stützhebel durch eine Steuerwippe (10) gebildet ist, die die bezogen auf die Fahrtrichtung (F) vordere Lamelle (L1) abstützt.

3. Lamellendach nach Anspruch 2,
**dadurch gekennzeichnet,**
**dass** die Steuerwippe (10) mit der vorderen Lamelle (L1) über eine längs deren Lamellenträger (T1) verlaufende Führungskulisse (8) verbunden ist.

4. Lamellendach nach Anspruch 2 oder 3,
**dadurch gekennzeichnet,**
**dass** die Schwenkachse (11) der Steuerwippe (10) zur Schwenkachse (7) der über den gleichen Führungsschlitten (z. B. F2) als die Steuerwippe getragenen, rückwärtigen Lamelle (L2) in Fahrtrichtung (F) versetzt liegt.

5. Lamellendach nach einem der Ansprüche 2 bis 4,
**dadurch gekennzeichnet,**
**dass** die Steuerwippe (10) und der Lamellenträger (z. B. T1) der über den gleichen Führungsschlitten (F1) als die Steuerwippe getragenen Lamelle (L1) gleiche Erstreckungsrichtung aufweisen.

6. Lamellendach nach einem der Ansprüche 2 bis 5,
**dadurch gekennzeichnet,**
**dass**, bezogen auf die Öffnungsstellung des Daches (4) aufeinander folgenden Lamellen (L1-L4) bzw. Führungsschlitten (F1-F5) zugeordnete Steuerwippen (10) einander überlappen und im Überlappungsbereich gegeneinander abgestützt sind.

7. Lamellendach nach einem der Ansprüche 2 bis 6,
**dadurch gekennzeichnet,**
**dass** die Abstützung der Steuerwippen (10) gegeneinander im Bereich der Abstützung der dem jeweils rückwärtigen Führungsschlitten (z. B. F2) zugeordneten Steuerwippe (10) gegen die der vorderen Lamelle (L1) zugehörige Führungskulisse (8) erfolgt.

8. Lamellendach nach Anspruch 7,
**dadurch gekennzeichnet,**
**dass** die Abstützung der Steuerwippen (10) gegeneinander mit der Abstützung der dem jeweils rückwärtigen Führungsschlitten (F2) zugeordneten Steuerwippe (10) gegen die der vorderen Lamelle (L1) zugehörige Führungskulisse (8) zusammenfällt.

9. Lamellendach nach einem der Ansprüche 2 bis 8,
**dadurch gekennzeichnet,**
**dass** die die jeweils vordere Lamelle (z. B. L1) abstützende Steuerwippe (10) in der Öffnungsstellung der Lamellen in eine abstützende Überlappungsstellung zur Steuerwippe (10) der in Öffnungsrichtung nächst folgenden Steuerwippe (L2) einfährt.

10. Lamellendach nach Anspruch 9,
**dadurch gekennzeichnet,**
**dass** das Teil der Steuerwippe (10), gegen das sich die in Schließrichtung (F) jeweils voraufgehende Steuerwippe (10) in der Öffnungsstellung des Lamellendaches (4) abstützt, durch den in die Führungskulisse (8) der zwischen diesen Steuerwippen (10) liegenden Lamelle (z. B. L1) eingreifenden Teil (Stützzapfen 9) der Steuerwippe (10) gebildet ist.

11. Lamellendach nach Anspruch 1,
**dadurch gekennzeichnet,**
**dass** als Stützhebel ein Sperrhebel (17) vorgesehen ist, über den aufeinander folgende und aufeinander aufgefahrene Führungsschlitten (F1-F5) gegeneinander verriegelbar sind und der auch bei Abstützung gegen eine Kulissenbahn (18) der in Fahrtrichtung (F) vorderen Lamelle (z. B. L1) und gegen eine Auflauf- und Rastfläche (22, 23) des in Öffnungsrichtung des Daches (4) anschließenden Führungsschlittens (F2) anlegbar ist.

## Claims

1. Lamella roof for vehicles, having at least two lamellae (L1-L4), which are assigned to a roof opening, can be fixed to the roof and, guided on rails, can be moved, via a guide mechanism (6), between a closed position, in which they are arranged in a composite sheet-like arrangement covering the roof opening (1), and an open position, in which the roof opening (1) is exposed and the lamellae are opened out obliquely upwards in the opening direction such that they overlap one another in a layered manner, it being possible for the lamellae (L1-L4) of the composite arrangement, which is acted upon by a drive in the direction of the rear open position of the said lamellae, to be changed over, beginning for successive lamellae (e.g. L1 and L2) with the rear lamella (L2), by pivoting them in an overlapping manner in the same direction towards their open position via the guide mechanism (6); which comprises lamella carriers (T1-T4) and guide carriages (F1-F5) and has supporting levers (control rocker 10, locking lever 17) which adjust successive lamellae (L1 and L2) in relation to each other and/or block them in their movement and of which in each case at least one is mounted with one lamella (L1 or L2) on a guide carriage (F1 or F2), **characterized in that**, in order to support the lamellae (e.g. L1) in the open position of the roof (4), supporting levers (10) which are assigned to successive guide carriages (F1 and F2) and, with respect to the lamellae (L1) supported by the said guide carriages, correspond to each other are supported against each other.

2. Lamella roof according to Claim 1, **characterized in that** a supporting lever is formed by a control rocker (10) which supports the lamella (L1) which is in front with respect to the direction of travel (F).

3. Lamella roof according to Claim 2, **characterized in that** the control rocker (10) is connected to the front lamella (L1) via a guide slot (8) running along the lamella carrier (T1) of the same.

4. Lamella roof according to Claim 2, or 3, **characterized in that** the pivot axis (11) of the control rocker (10) is offset in the direction of travel (F) with respect to the pivot axis (7) of the rear lamella (L2), which is carried by the same guide carriage (e.g. F2) as the control rocker.

5. Lamella roof according to one of Claims 2 to 4, **characterized in that** the control rocker (10) and the lamella carrier (e.g. T1) of the lamella (L1) carried by the same guide carriage (F1) as the control rocker have the same direction of extent.

6. Lamella roof according to one of Claims 2 to 5, **characterized in that** control rockers (10) which are assigned to successive lamellae (L1-L4) or guide carriages (F1-F5), with respect of the open position of the roof (4), overlap each other and are supported against each other in the overlapping region.

7. Lamella roof according to one of Claims 2 to 6, **characterized in that** the support of the control rockers (10) against each other is undertaken in the region of the support of the control rocker (10), which is assigned to the rear guide carriage (e.g. F2)in each case, against the guide slot (8) associated with the front lamella (L1).

8. Lamella roof according to Claim 7, **characterized in that** the support of the control rockers (10) against each other coincides with the support of the control rocker (10), which is assigned to the rear guide carriage (F2) in each case, against the guide slot (8) associated with the front lamella (L1).

9. Lamella roof according to one of Claims 2 to 8, **characterized in that** the control rocker (10) supporting the front lamella (e.g. L1) in each case moves, in the open position of the lamellae, into a supporting overlapping position with respect to the control rocker (10) of the lamella (L2) following next in the opening direction.

10. Lamella roof according to Claim 9, **characterized in that** that part of the control rocker (10) against which the control rocker (10) preceding it in each case in the closing direction (F) is supported in the open position of the lamella roof (4) is formed by that part (supporting pin 9) of the control rocker (10) which engages in the guide slot (8) of the lamella (e.g. L1) situated between the control rockers (10).

11. Lamella roof according to Claim 1, **characterized in that** as the supporting lever, a blocking lever (17) is provided via which successive guide carriages (F1-F5) which are moved onto one another can be locked in relation to one another and which, even when supported, can be placed against a slot path (18) of the lamella (e.g. L1) which is in front in the direction of travel (F), and against a run-on and latching surface (22, 23) of the guide carriage (F2) adjoining it in the open direction of the roof (4).

## Revendications

1. Toit à lamelles destiné à des véhicules, avec au moins deux lamelles (L1 à L4) associées à une ouverture ménagée dans le toit, qui peuvent être montées de façon fixe sur le toit et qui sont mobiles par l'intermédiaire d'un mécanisme de guidage (6) tout en étant guidées dans des rails, entre une position de fermeture, dans laquelle elles sont disposées en un ensemble à grande surface recouvrant l'ouverture ménagée dans le toit (1), et une position d'ouverture libérant l'ouverture ménagée dans le toit (1), dans laquelle elles sont relevées en couches en oblique vers le haut, dans le sens d'ouverture, en se chevauchant, les lamelles (L1 à L4) de l'ensemble soumis à un entraînement en direction de leur position d'ouverture postérieure, à commencer pour les lamelles consécutives (par exemple L1 et L2) pouvant être déplacées avec la lamelle postérieure (L2) par un pivotement dans le même sens en se chevauchant en direction de leur position d'ouverture par le mécanisme de guidage (6), qui comprend des supports de lamelles (T1 à T4) et des curseurs de guidage (F1 à F5) et qui est muni de leviers de soutien (archet de commande 10, levier de blocage 17) déplaçant des lamelles consécutives (L1 et L2) les unes contre les autres ou les bloquant dans leur déplacement et dont au moins respectivement l'un d'entre eux est logé avec une lamelle (L1 ou L2) sur un curseur de guidage (F1 ou F2),
**caractérisé en ce**
**que** pour soutenir les lamelles (par exemple L1) en position d'ouverture du toit (4), des leviers d'appui (10) associés à des curseurs de guidage consécutifs (F1 et F2) et se correspondant en fonction des lamelles (L1) portées par ces derniers sont appuyés les uns contre les autres.

2. Toit à lamelles selon la revendication 1,
**caractérisé en ce**
**qu'**un levier d'appui est formé par un archet de commande (10), qui soutient la lamelle antérieure (L1) par rapport au sens de déplacement (F).

3. Toit à lamelles selon la revendication 2,
**caractérisé en ce que**
l'archet de guidage (10) est relié avec la lamelle antérieure (L1), par l'intermédiaire d'une coulisse de guidage (8) s'étendant le long du support de lamelles (T1) de celle-ci.

4. Toit à lamelles selon l'une quelconque des revendications 2 ou 3,
**caractérisé en ce que**
l'axe de pivotement (11) de l'archet de commande (10) est déporté dans le sens de déplacement (F) par rapport à l'axe de pivotement (7) de la lamelle (L2) postérieure qui est portée par le même curseur de guidage (par exemple F2) que l'archet de commande (10).

5. Toit à lamelles selon l'une quelconque des revendications 2 à 4,
**caractérisé en ce que**
l'archet de commande (10) et le support de lamelles (par exemple T1) de la lamelle (L1) portée par le même curseur de guidage (F1) que l'archet de commande, présentent un tracé de même direction.

6. Toit à lamelles selon l'une quelconque des revendications 2 à 5,
**caractérisé en ce que**
par rapport à la position d'ouverture du toit (4), des archets de commande (10) associés à des lamelles (L1 à L4) successives ou à des curseurs de guidage successifs (F1 à F5) se chevauchent et sont appuyés les uns contre les autres dans la zone de chevauchement.

7. Toit à lamelles selon l'une quelconque des revendications 2 à 6,
**caractérisé en ce que**
l'appui des archets de commande (10) les uns contre les autres est assuré dans la zone d'appui de l'archet de commande (10) associé au curseur de guidage respectivement postérieur (par exemple F2) contre la coulisse de guidage (8) correspondant à la lamelle antérieure (L1).

8. Toit à lamelles selon la revendication 7,
**caractérisé en ce que**
l'appui des archets de commande (10) les uns contre les autres coïncide avec l'appui de l'archet de commande (10) associé au curseur de guidage respectivement postérieur (F2) contre la coulisse de guidage (8) correspondant à la lamelle antérieure (L1).

9. Toit à lamelles selon l'une quelconque des revendications 2 à 8,
**caractérisé en ce que**,
dans la position d'ouverture des lamelles, l'archet de commande (10) sur lequel s'appuie la lamelle respectivement antérieure (par exemple L1) adopte une position de chevauchement de soutien pour l'archet de commande (10), à savoir l'archet de commande directement consécutif (L2) dans le sens d'ouverture.

10. Toit à lamelles selon la revendication 9,
**caractérisé en ce que**
la partie de l'archet de commande (10) contre laquelle l'archet de commande respectivement antérieur (10) dans le sens de fermeture (F) s'appuie en position d'ouverture du toit à lamelles (4) est formée par la partie (talon de soutien 9) de l'archet de commande (10) qui s'accroche dans la coulisse de guidage (8) de la lamelle (par exemple L1) située entre ces archets de commande (10).

11. Toit à lamelles selon la revendication 1,
**caractérisé en ce**
**qu'**un levier de blocage (17), par l'intermédiaire duquel des curseurs de guidage (F1 à F5) successifs et relevés les uns sur les autres sont verrouillables entre eux et qui également lors de l'appui peut être appliqué contre une glissière à coulisse (18) de la lamelle antérieure (par exemple L1) dans le sens de déplacement (F) et contre une surface d'accostage et d'arrêt (22, 23) du curseur de guidage (F2) consécutif dans le sens d'ouverture du toit (4), est prévu en tant que levier de soutien.
